# EUROPÄISCHE PATENTSCHRIFT

(11) **EP 3 038 294 B1**
(45) Veröffentlichungstag und Bekanntmachung des Hinweises auf die Patenterteilung: **13.02.2019**
(21) Anmeldenummer: 15202267.9
(22) Anmeldetag: 23.12.2015
(51) Int. Cl.: G01W 1/00, H04L 12/28, H04L 29/08

(54) **SYSTEM UND VERFAHREN ZUM BEREITSTELLEN VON UMWELTDATEN**
SYSTEM AND METHOD FOR PROVIDING ENVIRONMENTAL DATA
SYSTEME ET PROCEDE DE MISE A DISPOSITION DE DONNEES SUR L'ENVIRONNEMENT

(30) Priorität: 24.12.2014 CH 20312014
(43) Veröffentlichungstag der Anmeldung: 29.06.2016
(73) Patentinhaber: Griesser Holding AG, 8355 Aadorf (CH)
(72) Erfinder: ROHNER, Markus, 8165 Oberweningen (CH); NIEDERER, Ueli, 9242 Oberuzwil (CH)
(74) Vertreter: Gachnang, Hans Rudolf

(56) Entgegenhaltungen:
- EP-A1- 2 028 576
- WO-A1-02/41582
- DE-A1-102004 017 778

## Beschreibung

Gegenstand der Erfindung ist ein System und ein Verfahren zum Bereitstellen von Umweltdaten gemäss dem Oberbegriff der Patentansprüche 1 und 7 sowie eine Steueranordnung gemäss dem Oberbegriff des Patentanspruchs 9.

Es ist bekannt, Anlagen und Systeme bei Gebäuden in Abhängigkeit sensorisch erfasster Messgrössen zu steuern. Ein Beispiel für ein derartiges Gebäudemanagementsystem ist in der EP 2 028 576 A1 offenbart. Insbesondere können bei einem Gebäude zur Steuerung von Heizungs-, Lüftungs- und Klimaanlagen, Solaranlagen, Photovoltaikanlagen, Sonnenschutzsystemen, Beleuchtungseinrichtungen, Vorrichtungen zur Speicherung von Regenwasser oder dergleichen Sensoren vorgesehen sein, welche wetter- bzw. witterungsabhängige Messgrössen wie z.B. Windstärke, Windrichtung, Aussentemperatur, Aussenhelligkeit oder Regen direkt vor Ort bzw. beim jeweiligen Gebäude erfassen. Diese Messgrössen werden somit im Wesentlichen am Ort der Nutzung und zur aktuellen Nutzungszeit erfasst und zu Steuergrössen für Aktoren verarbeitet.

Im Weiteren ist es bekannt, dass zur Steuerung von Anlagen auch Wetterprognosen berücksichtigt werden können. Beispielsweise ist in der DE 10 2004 017 778 A1 gezeigt, dass von lokalen Installationsteilnehmern ermittelte lokale Wetterdaten zentral ausgewertet werden und zu einer Wettervorhersage zusammengefasst werden. Die Wettervorhersage kann von einem globalen Netzwerk dem oder den lokalen Netzwerken zur Verfügung gestellt werden. In der WO0241582 A1 ist eine Koppeleinrichtung und ein Koppelverfahren zur Koppelung von lokalen und globalen Netzwerken beschrieben, welche eine zentrale Auswertung von Daten und Informationen einer Vielzahl von in sich geschlossenen Systemen ermöglicht. So bietet beispielsweise die Firma MeteoGroup Deutschland GmbH einen Wetter-Webservice für die Gebäudeautomation an. Über eine Schnittstelle können Gebäudeleitsysteme Wetterprognosen für den Standort des Gebäudes abfragen oder Unwetterwarnungen des Webservices empfangen. Diese können z.B. zum Schutz und zur Schadensverhütung genutzt werden, indem beispielsweise Sonnenschutzsysteme wie Markisen, Rollladen und Jalousien rechtzeitig vor Beginn eines Sturms oder Gewitters in eine geschützte Lage bewegt werden. Die Prognosedaten basieren auf Messdaten einer Vielzahl von Messstationen, die verteilt über ein grosses Gebiet, z.B. ein oder mehrere Länder, angeordnet sind und Wetterdaten nach dem WMO-Standard messen. Die Wetterstationen solcher Prognosedienstleister sind in der Regel in einem bezogen auf lokale Verhältnisse grobmaschigen Netz angeordnet. Die Entfernung benachbarter Wetterstationen ist in der Regel deutlich grösser als 1km. Niederschlagsdaten können alternativ oder zusätzlich auch mittels weniger Radarstationen erfasst werden, die verteilt über das grosse Gebiet angeordnet sind. Damit können Wetterdaten höchstens mit einer lokalen Auflösung von etwa einem Quadratkilometer bereitgestellt werden. Zudem sind Radarstationen vorzugsweise an erhöhten Positionen wie z.B. Bergen angeordnet, damit sie ein möglichst grosses Gebiet erfassen können. Wetterdaten von Prognosedienstleistern werden somit herkömmlich nicht dort erfasst, wo sie tatsächlich gebraucht werden. Die Daten der Wetterstationen werden in der Regel periodisch z.B. alle zehn Minuten an eine Wetterzentrale übermittelt, wo sie ausgewertet und gegebenenfalls Prognosedaten für unterschiedliche Standorte berechnet werden. Alternativ oder zusätzlich zu Prognosedaten kann die Wetterzentrale auch Rohdaten wie aktuelle und/oder frühere Messdaten der Wetterstationen zur Verfügung stellen, wobei auch der geografische Ort dieser Wetterstationen verfügbar ist. Solche Daten können beispielsweise von den lokalen Gebäudeleitsystemen bzw. gebäudetechnischen Steuerungen abgefragt werden. Alternativ oder zusätzlich können auch Warndienste abonniert werden, welche den lokalen Steueranordnungen z.B. bei drohendem Starkregen oder wahrscheinlichen Sturmböen beim jeweiligen Gebäudestandort eine Alarmnachricht zustellen.

Wetterphänomene wie z.B. Hagel oder Windböen können sehr lokal und/oder plötzlich eintreten. "Lokal" bedeutet in diesem Zusammenhang, dass das jeweilige Wetterphänomen zu einem bestimmten Zeitpunkt nur in einer Umgebung von beispielsweise weniger als einigen hundert Metern vom einem bestimmten Ort eintritt. Mit dem grobmaschigen Netz von Messstationen können solche lokalen Wetterereignisse nicht zuverlässig bzw. nur mit ungenügender räumlicher und zeitlicher Auflösung erfasst werden. Basierend auf Messdaten von Messstationen, die weit auseinanderliegen, können deshalb Prognosen für spezifische lokale Standorte nicht oder zumindest nicht mit einer ausreichend hohen räumlichen Auflösung bereitgestellt werden. Dies gilt insbesondere für kurzfristige Prognosen in der Grössenordnung von weniger als einer Minute bis zu mehreren Minuten.

Da Messdaten vom Webservice erst mit einer zeitlichen Verzögerung bereitgestellt werden, ist auch die zeitliche Auflösung solcher Messdaten unzureichend für kurzfristige Wetterprognosen an bestimmten lokalen Standorten.

Die zeitliche Verzögerung zwischen der sensorischen Erfassung eines Unwetterereignisses an einem Erfassungsort und der Auslösung von Schutzmassnahmen wie z.B. dem Einfahren von Markisen an einem Nutzungsort bzw. an einem Gebäudestandort, der in einer bestimmten Entfernung zum Erfassungsort liegt, sollte kleiner sein als die zu erwartende minimale Laufzeit, mit der sich das Unwetterereignis vom Erfassungsort zum Gebäudestandort verlagern kann. Liegt ein Gebäudestandort lokal nahe bei einer Messstation bzw. bei einem Erfassungsort und breitet sich ein am Erfassungsort festgestelltes gefährliches Wetterereignis in Richtung des Gebäudestandorts aus, so sind zeitliche Verzögerungen zwischen der Erfassung des Wetterereignisses und der Auslösung von Schutzmassnahmen beim Gebäude nicht tolerierbar. Die Übermittlung einer Nachricht bzw. eines Alarms wegen eines potentiell gefährlichen Wetterereignisses sollte deshalb möglichst verzögerungsfrei erfolgen.

Die Höhe tolerierbarer zeitlicher Verzögerungen zwischen der Erfassung von Messwerten an einem Erfassungsort und der Steuerung von Aktoren an einem Nutzungsort in Abhängigkeit dieser Messwerte ist umso kleiner, je näher Erfassungsort und Nutzungsort beieinander liegen und je grösser die erwartete maximale Verlagerungsgeschwindigkeit des Wetterereignisses in Richtung des Nutzungsorts ist. Dort, wo Messdaten nur zur Steuerung zeitlich unkritischer Prozesse wie z.B. der Vorlauftemperatur einer Bodenheizung genutzt werden, sind grössere zeitliche Verzögerungen akzeptabel.

Würde eine Steuerung von Sonnenschutzvorrichtungen bei einem Gebäude ausschliesslich anhand von Wetterdaten erfolgen, die nicht am Standort dieses Gebäudes erfasst worden sind, könnte dies zu Problemen führen. So können beispielsweise Sonneneinstrahlung und Wind lokal bzw. kleinräumig sehr unterschiedlich sein. Mit einem bezogen auf lokale Verhältnisse grobmaschigen Netz von Messstationen mit beispielsweise einer Messstation pro Quadratkilometer ist es nicht möglich, aktuelle lokale Wetterparameter wie Helligkeit-, Temperatur, Windstärke, Windrichtung, Regen, Schnee oder Hagel am Ort eines Gebäudes bereitzustellen. Deshalb ist die Nutzung von Wetterprognosen nur als Ergänzung zu Messgrössen, die ohne wesentliche zeitliche Verzögerung am Standort des Gebäudes erfasst werden, zu bevorzugen.

Ein weiterer Grund, Wettermessgrössen lokal direkt am Standort eines oder mehrerer Gebäude zu erfassen, liegt in der autonomen Funktionsfähigkeit der Steuerung von Anlagen und Systemen bei diesem Gebäude bzw. bei diesen Gebäuden. Solche Steuerungen sind auch dann autonom funktionsfähig, wenn sie keine Prognosedaten oder Wettermessdaten über ein Kommunikationsnetz von Dritten empfangen. Störungen bei der Übermittlung solcher Daten können sich dann nur auf Optimierungsfunktionen der lokalen Steuerung auswirken, nicht jedoch auf Grundfunktionen, die in Abhängigkeit lokal erfasster Messgrössen gesteuert werden. Dies gilt auch für Situationen, in denen ein Datenlieferant nicht in der Lage ist, die erforderlichen Wetterdaten bereitzustellen.

Wenn Sonnenschutzeinrichtungen bei einem nahenden Unwetter mit Windböen und/oder Hagel in eine geschützte Position gebracht werden sollen, kann die räumliche und/oder die zeitliche Auflösung bzw. Genauigkeit herkömmlicher Wetterprognosen ungenügend sein, wie folgendes Beispiel zeigt:
Sonnenschutzeinrichtungen können in vergleichsweise kurzer Zeit in der Grössenordnung einer Minute in eine geschützte Stellung verfahren werden. Die Vorlaufzeit, mit der eine Sonnenschutzvorrichtung z.B. vor Beginn eines Sturms in die geschützte Stellung bewegt wird, sollte nicht unnötig lange sein, da dies sonst zu einer Komforteinbusse führen könnte. Im Vergleich zu weiträumigen und eher langfristig ausgerichteten Wetterprognosen sind zum Verfahren von Sonnenschutzvorrichtungen in eine geschützte Stellung lokal präzisere kurzfristige und möglichst verzögerungsfreie Warnungen vor Unwettern vorteilhafter.

Aus der US2011113120A1 ist ein Gebäudemanagementsystem mit einer zentralen Leitstelle und mehreren entfernt davon angeordneten gebäudetechnischen Einrichtungen bekannt, wobei jede dieser Einrichtungen eine Steuerkonsole umfasst. Jede dieser Steuerkonsolen kommuniziert über ein lokales Netzwerk (LAN) mit zugehörigen Sensoren bei den jeweiligen Einrichtungen und über ein Weitbereichsnetzwerk (WAN) mit der zentralen Leitstelle. Die Steuerkonsolen übermitteln Messdaten der Sensoren der jeweiligen gebäudetechnischen Einrichtung an die zentrale Leitstelle. Die zentrale Leitstelle wertet die Daten aus und steuert in deren Abhängigkeit zusammen mit den Steuerkonsolen die jeweiligen technischen Einrichtungen. Die Leitstelle ist somit ein wesentlicher Bestandteil der Steueranordnung, welche die lokalen gebäudetechnischen Einrichtungen steuert. Die von den Sensoren erfassten Daten können nur im Rahmen des jeweiligen Gebäudemanagementsystems zur Steuerung der zugehörigen gebäudetechnischen Einrichtungen verwendet werden, nicht jedoch zur Steuerung von gebäudetechnischen Einrichtungen bei anderen Steueranordnungen.

Eine Aufgabe der vorliegenden Erfindung ist es nun, ein System und ein Verfahren zum Bereitstellen von Umweltdaten zu schaffen, die lokal eine bessere räumliche und/oder zeitliche Auflösung von Umweltmessgrössen sicherstellen. Eine weitere Aufgabe der vorliegenden Erfindung besteht darin, eine Steuerungsanordnung zu schaffen, die eine verbesserte Steuerung lokaler gebäudetechnischer Einrichtungen ermöglicht.

Diese Aufgaben werden gelöst durch ein System und durch ein Verfahren zum Bereitstellen von Umweltdaten gemäss den Merkmalen der Patentansprüche 1 und 7 sowie durch eine Steuerungsanordnung gemäss den Merkmalen des Patentanspruchs 9.

Ein grundlegender Gedanke der Erfindung besteht darin, umweltabhängige Messgrössen, die von Sensoren bei Gebäuden an unterschiedlichen Standorten innerhalb eines Erfassungsgebiets erfasst werden, nicht nur zur direkten Steuerung von gebäudetechnischen Einrichtungen bei den jeweiligen Gebäuden zu verwenden, sondern diese zusätzlich auch einer Datenzentrale zur Verfügung zu stellen. Die Datenzentrale umfasst eine zentrale Rechneranordnung mit Verarbeitungsvorschriften zum Verarbeiten der von den Steueranordnungen an unterschiedlichen geografischen Standorten empfangenen Daten. Die Datenzentrale verarbeitet und speichert diese Daten und/oder anhand dieser Daten berechnete Werte wie beispielsweise Mittelwerte, Medianwerte oder Spitzenwerte in einem Datenspeicher und stellt diese so bereit, dass sie zur verbesserten Steuerung der gebäudetechnischen Anlagen an den lokalen Gebäudestandorten genutzt werden können.

Anhand einiger Figuren wird die Erfindung näher beschrieben. Dabei zeigen
- Figur 1: eine Prinzipdarstellung der Erfassung und Bereitstellung von Wetterdaten, wie sie aus dem Stand der Technik bekannt ist,
- Figur 2: eine Prinzipdarstellung der erfindungsgemässen Erfassung und Bereitstellung von Umweltdaten.

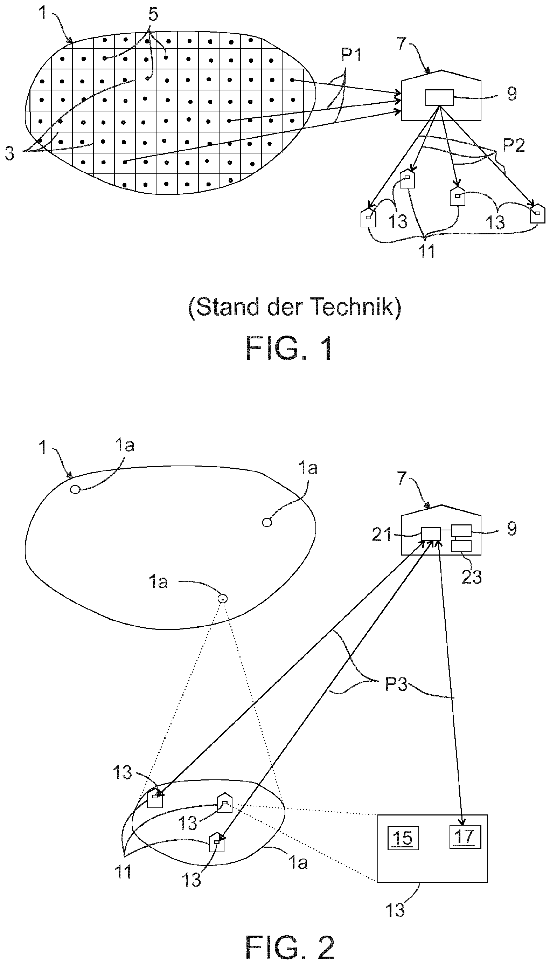

Figur 1 zeigt schematisch, wie Wettermessgrössen für die Bereitstellung von Wetterdaten herkömmlich in einem geografischen Gebiet 1, von dem in Figur 1 nur ein Ausschnitt dargestellt ist, erfasst werden. Das geografische Gebiet 1 ist ein Erfassungsgebiet, das in ein Netz von Erfassungszellen 3 aufgeteilt ist, von denen jede eine Fläche von beispielsweise etwa einem Quadratkilometer aufweist. In jeder Erfassungszelle 3 ist eine

Wetterstation 5 mit mehreren Sensoren zum Erfassen wetterabhängiger Messgrössen angeordnet. Benachbarte Wetterstationen 5 haben somit einen durchschnittlichen gegenseitigen Abstand in der Grössenordnung von etwa einem Kilometer oder mehr. Die Wetterstationen 5 übermitteln erfasste Messgrössen z.B. periodisch in Intervallen von etwa 10 Minuten an eine Wetterzentrale bzw. Datenzentrale 7. Dies ist in Figur 1 durch die Pfeile P1 dargestellt. Eine zentrale Rechneranordnung 9 der Datenzentrale 7 berechnet aus den Messdaten der Wetterstationen 5 anhand von Wettermodellen Prognosedaten für unterschiedliche Standorte des geografischen Gebiets 1. Solche Prognosedaten können z.B. bei Gebäuden 11, die sich im geografischen Gebiet 1 befinden, zur Steuerung von gebäudetechnischen Einrichtungen verwendet werden. Die Übermittlung entsprechender Wetterdaten von der Datenzentrale 7 an lokale Steueranordnungen 13 bei diesen Gebäuden 11 ist in Figur 1 schematisch durch die Pfeile P2 dargestellt.

Figur 2 zeigt schematisch, wie Umweltmessgrössen erfindungsgemäss bereitgestellt werden. Das geografische Gebiet 1, von dem wiederum nur ein Ausschnitt dargestellt ist, umfasst Siedlungsgebiete bzw. Teilgebiete 1a, in denen Gebäude 11 angeordnet sind, die je eine Steueranordnung 13 zum Steuern zugehöriger gebäudetechnischer Anlagen umfassen.

Solche gebäudetechnischen Einrichtungen sind insbesondere Sonnenschutzvorrichtungen wie Markisen, Rollladen und Rafflamellenstoren, die mittels Motoren bzw. Aktoren bewegt werden können.

Jede Steueranordnung 13 umfasst mindestens einen Sensor 15, der so ausgebildet und beim Gebäude 11 angeordnet ist, dass er eine Umweltmessgrösse erfassen kann, also eine Messgrösse, die durch Umweltfaktoren ausserhalb des Gebäudes 11 wie z.B. Windstärke, Windrichtung, Aussentemperatur, Regen, Hagel, Luftfeuchtigkeit, Sonneneinstrahlung etc. beeinflussbar ist. Vorzugsweise umfasst die Steueranordnung 13 eine Anordnung mehrerer solcher Sensoren 15, die gleiche und/oder verschiedene Umweltmessgrössen erfassen. Mehrere solcher Sensoren 15 können beispielsweise in einer Wetterstation zusammengefasst sein, die auf dem Gebäudedach angeordnet ist. Alternativ oder zusätzlich können Sensoren 15 auch an einer oder mehreren Fassaden des Gebäudes 11 in gleicher oder unterschiedlicher Höhe angeordnet sein.

In Figur 2 sind ein Ausschnitt eines Teilgebiets 1a und eine Steueranordnung 13 eines Gebäudes 11 in diesem Teilgebiet 1a vergrössert dargestellt, was durch punktierte Linien angedeutet ist. Jede Steueranordnung 13 umfasst eine lokale Kommunikationseinrichtung 17, die dazu ausgebildet ist, lokale Umweltdaten, die auf der oder den lokal erfassten Umweltmessgrössen basieren, d.h. die Messwerte selbst oder nach bestimmten Regeln aus den Messwerten berechnete Werte wie beispielsweise gleitende Mittelwerte, an eine Datenzentrale 7 zu übermitteln. Die Datenzentrale 7 umfasst für diesen Zweck eine zentrale Kommunikationseinrichtung 21. Die Datenzentrale 7 bzw. deren Rechneranordnung 9 speichert lokal bei verschiedenen Gebäudestandorten im Erfassungsgebiet erfasste lokale Umweltdaten so in einem Datenspeicher 23, dass die Information des jeweiligen Erfassungsorts erhalten bleibt.

Als Erfassungsgebiet wird ein geografisches Gebiet 1 bezeichnet, in dem Gebäude 11 mit Steueranordnungen 13 angeordnet sind, wobei diese Steueranordnungen 13 mindestens einen Sensor 15 zum Erfassen einer Umweltmessgrösse und eine lokale Kommunikationseinrichtung 17 zum Übermitteln von Daten an eine gemeinsame Datenzentrale 7 umfassen.
In der Regel ist das Erfassungsgebiet eher grossräumig, also beispielsweise ein ganzes Land, ein grösseres Gebiet dieses Landes oder ein Gebiet, das sich über mehrere Länder erstrecken kann. Die Gebäude 11 mit den Steueranordnungen 13 können im Erfassungsgebiet clusterartig verteilt angeordnet sein, beispielsweise in Siedlungen, Dörfern und Städten. Dazwischen kann das Erfassungsgebiet auch grössere Bereiche ohne solche Gebäude umfassen.

Die lokale Kommunikationseinrichtung 17 ist vorzugsweise bei einem Rechner der Steueranordnung 13 ausgebildet und kann mit der zentralen Kommunikationseinrichtung 21 der Datenzentrale 7 kommunizieren.
Die Daten werden in an sich bekannter Weise gemäss einem vorgegebenen Protokoll über ein oder mehrere verschiedene Kommunikationsnetze beispielsweise per Funk, Mobilfunk oder leitungsgebunden über das Internet an die zentrale Kommunikationseinrichtung 21 der Datenzentrale 7 übermittelt.
Alternativ kann die lokale Kommunikationsvorrichtung 17 z.B. auch bei einer Wetterstation mit den Sensoren 15 angeordnet sein.

Die von lokalen Steueranordnungen 13 an die Datenzentrale 7 übermittelten Daten umfassen Informationen zum geografischen Standort des jeweiligen Gebäudes 11 bzw. des Erfassungsortes, an dem die zugrundliegenden Umweltmessgrössen erfasst werden. Die entsprechenden Geokoordinaten, also z.B. dessen Längen- und Breitengrad vorzugsweise mit einer Auflösung in der Grössenordnung von etwa 0.001" oder besser. Dies entspricht einer Distanz von etwa 10 m und ermöglicht die Unterscheidung von nahe beieinanderliegenden Gebäudestandorten. Vorzugsweise wird der Erfassungsort durch Koordinaten angegeben, die etwa der Mitte der Gebäudegrundfläche entsprechen.
Alternativ zu Geokoordinaten könnte der geografische Standort eines Gebäudes 11 auch durch einen Identifikationscode angegeben werden, aus dem die Datenzentrale 7 eindeutig den jeweiligen lokalen geografischen Standort ermitteln kann.

Vorzugsweise ist vorgesehen, dass jede lokale Steuereinrichtung 13 alle Sensoren 15, von denen Daten an die Datenzentrale 7 übermittelt werden sollen, bei der Datenzentrale 7 registriert. Optional können dabei auch zusätzliche Daten an die Datenzentrale 7 übermittelt werden, welche die Anordnung der Sensoren 15 an einem Gebäude 11 genauer angeben. Diese Daten können beispielsweise Codes umfassen, die angeben, ob ein Sensor 15 freistehend oder auf einem Gebäudedach oder an einer Fassade angeordnet ist, in welcher Himmelsrichtung die Fassade ausgerichtet ist, in welcher Höhe über dem Boden der Sensor 15 angeordnet ist, in welchem Längenabschnitt der Fassade der Sensor 15 angeordnet ist. Die Steueranordnungen 13, welche Daten an die Datenzentrale 7 liefern, können ebenfalls registriert werden, wobei die Geokoordinaten des geografischen Standorts des Gebäudes 11 als Erfassungsort an die Datenzentrale 7 übermittelt werden.
Bei der Registrierung von Sensoren 15 können optional ebenfalls deren geografische Standorte angegeben werden. Vorzugsweise werden bei der Registrierung zusätzliche Informationen wie z.B. genauere Angaben zu den Sensoren einmalig an die Datenzentrale 7 übertragen werden. Da solche Informationen bei der Datenzentrale 7 registriert sind, müssen sie fortan nicht bei jeder Übertragung von Messdaten mitgeliefert werden. Dadurch kann die an die Datenzentrale 7 zu übermittelnde Datenmenge für die Übermittlung von Messwerten auf ein Minimum beschränkt werden.

Die während des Betriebs von den Steueranordnungen 13 an die Datenzentrale 7 übermittelten Daten umfassen Informationen zu einer oder mehreren Umwelt-Messgrössen, die von einem oder mehreren Sensoren 15 bei den jeweiligen Gebäudestandorten zu bestimmten Zeitpunkten oder während bestimmten Zeitintervallen erfasst worden sind, sowie explizite oder implizite Informationen zu diesen Zeitpunkten oder Zeitintervallen.
Alternativ oder zusätzlich können die Steueranordnungen 13 auch Daten an die Datenzentrale 7 übermitteln, die durch Verarbeitung der Umwelt-Messgrössen gewonnen wurden, beispielsweise Mittelwerte von Messgrössen während vorgegebener Messintervalle oder einen Alarmstatus, der beim Überschreiten eines vorgegebenen Grenzwertes durch eine der Messgrössen ausgelöst wird.
Zu den Umwelt-Messgrössen gehören insbesondere WetterMessgrössen wie Windgeschwindigkeit, Windrichtung, Aussentemperatur, Niederschlag in Form von Regen oder Schnee, Hagelschlag, Feuchtigkeit, Frost, Beleuchtungsstärke (Werte zwischen 1kLux und etwa 100kLux werden in der Praxis als Helligkeit bezeichnet und Werte zwischen 0 und 1 kLux als Dämmerung), Globalstrahlung, Luftdruck, etc., aber auch Messgrössen, welche die Luftqualität widerspiegeln, also beispielsweise die Konzentration von CO2 oder NOx-Gasen, Russpartikeln etc. Als Umweltmessgrösse können z.B. auch Schall mittels eines Mikrofons oder Körperschall durch einen Schalldetektor erfasst werden. Dies ermöglicht beispielsweise auch die indirekte Erfassung der Windstärke anhand von Windgeräuschen oder anhand von Körperschall, der durch vom Wind bewegte Objekte wie z.B. den Lamellen eines Lamellenstorens verursacht wird.
Die Übermittlung der Messwerte der Sensoren 15 bzw. von Daten, die auf Basis dieser Messwerte ermittelt wurden, an die Datenzentrale 7 erfolgt nach vorgegebenen Regeln, die in der jeweiligen Steueranordnung 13 gespeichert sind. Die Regeln können z.B. vorgeben, welche Daten wie aus welchen Messwerten berechnet und/oder bereitgestellt werden sollen, und wann diese Daten an die Datenzentrale 7 übermittelt werden sollen. Die Daten können z.B. die unveränderten Messwerte selbst und/oder gleitende Mittelwerte von Messwerten und/oder Spitzenwerte von Messwerten umfassen. Mittelwerte und Spitzenwerte können beispielsweise in vorgegebenen Zeitintervallen von 0.5 min bis 5 min Dauer erfasst werden. Die Übermittlung von Daten an die Datenzentrale 7 kann beispielsweise periodisch erfolgen, wobei die Periode vorzugsweise im Bereich von 0.5 min bis 5 min. liegt. Alternativ oder zusätzlich kann die Übermittlung von Daten z.B. auch dann erfolgen, wenn sich der Wert einer Messgrösse im aktuellen Zeitintervall seit der letzten Übermittlung um einen vorgebbaren Betrag erhöht oder erniedrigt bzw. geändert hat.

Alternativ oder zusätzlich zu einer aktiven periodischen Übermittlung von Daten durch die lokalen Steueranordnungen 13 an die Datenzentrale 7 könnte die Datenzentrale 7 auch periodisch Messwerte bei allen oder nur bei einem Teil der Steueranordnungen 13 abfragen. Die lokale Steueranordnung 13 ist so ausgebildet, dass sie aus den erfassten Umweltmessgrössen potentiell gefährliche Wetterereignisse wie z.B. Hagel, starken Regen und starke Windböen erkennt, beispielsweise wenn eine Messgrösse einen vorgegebenen zugehörigen Grenzwert überschreitet. Die Kommunikationseinrichtung 17 veranlasst dann unverzüglich die Übermittlung einer Alarmmeldung mit den entsprechenden Informationen an die zentrale Kommunikationseinrichtung 21 der Datenzentrale 7.

Zusammen mit den Messgrössen bzw. den aus den Messgrössen ermittelten Daten kann jede lokale Steueranordnung 13 zusätzliche Informationen an die Datenzentrale 7 übermitteln, falls dies erforderlich ist, beispielsweise Angaben, welche die Sensoren 15 und damit die von diesen Sensoren 15 übermittelten Messgrössen eindeutig identifizieren. Alternativ zu einer vorgängigen Registrierung der Steueranordnung 13 und/oder der Sensoren 15 können entsprechende Daten auch als Zusatzinformationen beim Übertragen von Umweltdaten an die Datenzentrale 7 übermittelt werden.

Die Datenzentrale 7 bzw. die Rechneranordnung 9 speichert diese Daten in geeigneter Weise in einem Datenspeicher 23 der Datenzentrale 7, sodass bei jedem Messwert festgestellt werden kann, um welche Messgrösse es sich handelt, an welchem geografischen Standort und zu welcher Zeit (Datum und Uhrzeit) der Messwert erfasst wurde.

Vorzugsweise umfasst jede Steueranordnung 13 Vorschriften, wann welche Daten an die Datenzentrale 7 übermittelt werden sollen. So kann beispielsweise ein Zeitintervall vorgegeben sein, innerhalb dessen mindestens ein vollständiger Datensatz übermittelt werden soll. Alternativ oder zusätzlich können für die Messwerte eines, mehrerer oder aller Sensoren 15 Vergleichswerte vorgegeben werden. Der Messwert eines Sensors 15 wird mit dem gespeicherten, zuletzt an die Datenzentrale übermittelten Messwert des gleichen Sensors 15 verglichen. Wenn die Differenz der verglichenen Messwerte betragsmässig grösser ist als der zugehörige Vergleichswert, so löst dies eine weitere Übermittlung des aktuellen Messwerts an die Datenzentrale 7 aus. Auf diese Weise kann die Menge der an die Datenzentrale 7 übermittelten Informationen auf ein Minimum beschränkt werden.

Bei jeder lokalen Messgrösse können Bedingungen wie z.B. das Überschreiten eines Grenzwertes festgelegt werden, bei denen diese Messgrösse ohne Verzögerung bzw. prioritär mit einem Alarmstatus an die Datenzentrale 7 übermittelt werden sollen. Alarmstatus bedeutet, dass Datenzentrale 7 die übermittelten Daten eindeutig als prioritär zu behandelnde Daten identifizieren kann.

Die Rechneranordnung 9 der Datenzentrale 7 umfasst vorzugsweise eine Prüfeinrichtung, welche die Plausibilität von empfangenen Messdaten überprüft. Wenn beispielsweise ein Windsensor an der Fassade eines Gebäudes 11 wiederholt Werte liefert, die sich signifikant von den Werten eines oder mehrerer in der Nähe angeordneter Windsensoren unterscheiden oder Werte, die sich auch über lange Zeit nicht ändern, so ist dies ein Indiz dafür, dass der jeweilige Sensor 15 defekt oder ungünstig angeordnet ist. Dadurch können defekte Sensoren 15 einfach identifiziert und die Überprüfung dieser Sensoren 15 veranlasst werden. Je nach Ergebnis können diese Sensoren 15 ersetzt, repariert oder umplatziert werden. Der für den Vergleich herangezogene benachbarte Windsensor kann beispielsweise der Steueranordnung 13 eines anderen Gebäudes 11 zugeordnet sein, das sich nahe beim Gebäude 11 mit dem zu prüfenden Windsensor befindet. Da in der Datenzentrale 7 nicht nur die Messwerte von Sensoren 15 gespeichert sind, sondern auch deren genaue geographischen Positionen, kann die Prüfeinrichtung der Datenzentrale 7 auf einfache Weise automatisch geeignete Vergleichssensoren auswählen, die möglichst nahe beim zu prüfenden Sensor 15 liegen. Selbstverständlich können auch andere Sensoren 15 auf diese Weise überwacht werden.

Das Messstellennetz mit den Sensoren 15 der lokalen Steueranordnungen 13 hat genau dort eine hohe Dichte, wo mehrere oder viele Gebäude 11 mit solchen Steueranordnungen 13 stehen. Die räumliche Auflösung der von der Datenzentrale 7 bereitgestellten Messwerte ist demzufolge genau dort besonders hoch, wo dies erforderlich ist, nämlich in Siedlungsgebieten wie Dörfern oder Städten.

Die von der Datenzentrale 7 bereitgestellten Daten zu lokal bei einer Vielzahl von Gebäudestandorten erfassten Umweltmessgrössen können nun von den lokalen Steueranordnungen 13 dazu genutzt werden, die Steuerung der lokalen gebäudetechnischen Einrichtungen zu verbessern bzw. zu optimieren. Für diesen Zweck können bei jeder Steueranordnung 13 Vorschriften vorgegeben werden, wann und wie welche Daten von der Datenzentrale 7 an die Kommunikationseinrichtung 17 der jeweiligen Steueranordnung 13 zu übermitteln sind. Anhand dieser Vorgaben kann jede lokale Steueranordnung 13 bei der Datenzentrale 7 einen Service abonnieren, der sicherstellt, dass die gewünschten Daten in der gewünschten Weise von der Kommunikationseinrichtung 21 der Datenzentrale 7 an die Kommunikationseinrichtung 17 der lokalen Steueranordnung 13 übermittelt werden. Insbesondere besteht dabei die Möglichkeit, bei potenziell gefährlichen Umweltereignissen wie beispielsweise starken Windböen oder Hagel die von Sensoren 15 in einer nahen Umgebung eines Gebäudestandorts erfasst worden sind, beispielsweise innerhalb eines Umgebungsradius von 200 m oder 500 m, sofort ohne nennenswerte Verzögerung eine entsprechende Alarmmeldung von der Datenzentrale 7 an die betreffende Steueranordnung 13 zu übermitteln. Daraufhin kann die Steueranordnung 13 wiederum ohne nennenswerte Verzögerung geeignete Massnahmen zum Verhindern von Schäden veranlassen, beispielsweise das Hochfahren bzw. Einfahren aller Sonnenschutzeinrichtungen.

Die Rechneranordnung 9 der Datenzentrale 7 kann anhand der erhaltenen Messdaten mittels Wettermodellen Prognosedaten für die zukünftige Entwicklung verschiedener Wetterparameter wie zum Beispiel Temperatur, Windstärke, Windrichtung, Niederschlagsart, Niederschlagsintensität, Helligkeit usw. an unterschiedlichen geographischen Standorten ermitteln. Alternativ kann die Datenzentrale 7 solche Prognosedaten, die eher auf eine grossräumige allgemeine Wetterentwicklung ausgelegt sind, auch von Dritten beziehen.

Lokale Steueranordnungen 13 können die Datenzentrale 7 auch anweisen, z.B. periodisch alle 10 bis 15 Minuten zusätzlich oder alternativ zu aktuellen Messwerten Prognosedaten für den jeweiligen lokalen Standort an die lokale Steueranordnung 13 zu übermitteln. Für diesen Zweck können lokale Steueranordnungen 13 bei der Datenzentrale 7 einen entsprechenden Service abonnieren.

Als weitere Dienstleistung kann in einem abonnierten Service auch vorgesehen sein, dass die Datenzentrale 7, wenn sie einen Fehler bei einem Sensor 15 feststellt, eine entsprechende Nachricht an die betreffende lokale Steueranordnung 13 übermittelt.

In der Datenzentrale 7 gespeicherte Messdaten und/oder Prognosedaten können nach zeitlichen und örtlichen Kriterien durch die lokalen Steueranordnungen 13 abgefragt und/oder entsprechend der jeweils abonnierten Dienstleistungen von der Datenzentrale 7 an die lokalen Steueranordnungen 13 übermittelt werden.

Die Datenzentrale 7 übermittelt Messgrössen, die einen Alarmstatus aufweisen, ebenfalls ohne Verzögerung an lokale Steuerungsanordnungen 13, die sich beispielsweise innerhalb eines vorgebbaren Radius von beispielsweise 1km vom Standort entfernt befinden, von dem die ursprüngliche Alarmmeldung ausgegangen ist. Betrifft die Alarmmeldung z.B. das Überschreiten eines Grenzwertes der Windgeschwindigkeit oder Hagelschlag, können Sonnenschutzvorrichtungen in gefährdeten Gebieten nahezu ohne Verzögerung in eine Schutzstellung bewegt werden.

Bei Weiterbildungen dieses Systems kann die Datenzentrale 7 bei der Verarbeitung der erhaltenen Umweltdaten zu Mitteilungen oder Alarmen an die lokalen Steueranordnungen weitere Informationen wie z.B. Windstärke und Windrichtung berücksichtigen. So können beispielsweise bei Hagel oder Sturmböen prioritär jene lokalen Steueranordnungen 13 benachrichtigt werden, die innerhalb eines vorgebbaren Zeitraums von beispielsweise fünf Minuten von diesen Wetterphänomenen betroffen sein werden.
Die Verarbeitungsvorrichtung der Datenzentrale 7, welche die von den Steueranordnungen 13 empfangenen Daten verarbeitet, kann Verarbeitungsvorschriften umfassen, welche es ermöglichen die Qualität bzw. Aussagekraft der empfangenen Daten zu verbessern. Nachfolgend wird dies am Beispiel der Messgrössen von Niederschlagssensoren wie z.B. Regensensoren erläutert. Jeder dieser Sensoren 15 umfasst eine wirksame Sensorfläche zum Erfassen oder Sammeln von Regentropfen. Üblicherweise werden vom Sensor 15 erfasste Signale direkt beim Sensor 15 verarbeitet, wobei Kriterien wie z.B. eine Ansprechschwelle festlegen, wann das Signal als Regen interpretiert und von der Steueranordnung 13 entsprechen weiterbehandelt werden soll. Die Verarbeitungsvorrichtung der Datenzentrale 7 kann beispielsweise Messwerte verschiedener Regensensoren, die lokal nahe beieinander liegen, beispielsweise innerhalb eines Umkreises von etwa 100m oder 250m, akkumulieren bzw. gemeinsam verarbeiten und auswerten. Auf diese Weise entsteht ein virtueller Sensor, dessen wirksame Sensorfläche der Summe aller berücksichtigten Sensoren 15 entspricht. Die grössere wirksame Sensorfläche und die lokal verteilte Anordnung der Sensoren 15 ermöglichen es der Datenzentrale 7, eine aussagekräftigere virtuelle Messgrösse bereitzustellen.

In ähnlicher Weise kann die Datenzentrale 7 beispielsweise auch Signale von Helligkeitssensoren und/oder Windsensoren zu virtuellen Messgrössen mit einer besseren Aussagekraft verarbeiten. Dabei können z.B. einzelne Messwerte, die sich signifikant von anderen Messwerten unterscheiden, herausgefiltert und bei der Berechnung von plausiblen virtuellen Messwerten nicht berücksichtigt werden. Alternativ kann die Datenzentrale auch die tatsächlichen Messwerte bereitstellen, die dann von jeder lokalen Steueranordnung (13) direkt verarbeitet werden.

## Patentansprüche

1. System zum Bereitstellen von Umweltdaten für die Steuerung gebäudetechnischer Einrichtungen bei Gebäuden (11) an unterschiedlichen lokalen Gebäudestandorten, wobei an jedem dieser Gebäudestandorte eine Steueranordnung (13) zum Steuern der jeweiligen gebäudetechnischen Einrichtungen ausgebildet ist, wobei diese Steueranordnung (13) mindestens einen Sensor (15) umfasst, der zum Erfassen einer lokalen Umweltmessgrösse am jeweiligen Gebäudestandort ausgebildet ist, wobei diese Steueranordnung (13) eine Kommunikationseinrichtung (17) umfasst, die dazu ausgebildet ist, lokale Umweltdaten, die auf der lokal erfassten Umweltmessgrösse basieren, an eine Datenzentrale (7) mit einer zentralen Kommunikationseinrichtung (21) zu übermitteln, wobei durch die Datenzentrale (7) an mehreren Gebäudestandorten erfasste lokale Umweltdaten so in einem Datenspeicher (23) speicherbar sind, dass die Information des jeweiligen Erfassungsorts erhalten bleibt, und wobei die lokalen Umweltdaten und/oder anhand dieser Daten berechnete Werte der Datenzentrale (7) zur Steuerung der gebäudetechnischen Einrichtungen an den unterschiedlichen lokalen Gebäudestandorten nutzbar sind, **dadurch gekennzeichnet, dass** die lokale Steueranordnung (13) für die mindestens eine Messgrösse festgelegte Bedingungen umfasst, bei denen unverzüglich entsprechende Informationen mit einem Alarmstatus an die Datenzentrale (7) übermittelt werden.

2. System nach Anspruch 1, **dadurch gekennzeichnet, dass** der Sensor (15) zum Erfassen mindestens einer der folgenden Umweltmessgrössen ausgebildet ist:
- Windgeschwindigkeit
- Windrichtung
- Aussentemperatur
- Niederschlag in Form von Regen oder Schnee
- Hagelschlag
- Luftfeuchtigkeit
- Beleuchtungsstärke (Helligkeit, Dämmerung)
- Globalstrahlung
- Schall
- Luftdruck
- Konzentration von CO2 oder NOx-Gasen
- Russpartikel.

3. System nach einem der Ansprüche 1 oder 2, **dadurch gekennzeichnet, dass** die lokale Steueranordnung (13) Vorschriften zum Übermitteln lokal erfasster Umweltdaten an die Datenzentrale (7) umfasst, und dass für mindestens eine Messgrösse eine Bedingung vorgegeben ist, bei der diese Messgrösse ohne Verzögerung an die Datenzentrale (7) zu übermitteln ist.

4. System nach einem der Ansprüche 1 bis 3, **dadurch gekennzeichnet, dass** die lokale Kommunikationseinrichtung (17) jeder lokalen Steueranordnung (13) dazu ausgebildet ist, von der Datenzentrale (7) Umweltdaten zu empfangen, die auf Umweltmessgrössen basieren, welche durch Steueranordnungen (13) bei anderen Gebäudestandorten erfasst worden sind, und dass die Steuerung lokaler gebäudetechnischer Einrichtungen durch die Steueranordnung (13) in Abhängigkeit dieser empfangenen Umweltdaten erfolgt.

5. System nach einem der Ansprüche 1 bis 4, **dadurch gekennzeichnet, dass** die Datenzentrale (7) Vorschriften zum Übermitteln von Daten, die auf gespeicherten Umweltdaten basieren, an einzelne, mehrere oder alle lokalen Steueranordnungen (13) umfasst, und dass in diesen Vorschriften mindestens eine Bedingung vorgegeben ist, bei der Daten unverzüglich zu übermitteln sind.

6. System nach Anspruch 5, **dadurch gekennzeichnet, dass** in den Vorschriften der Datenzentrale (7) vorgesehen ist, nach dem Empfang von Daten mit einem Alarmstatus von einer bestimmten lokalen Steueranordnung (13) an andere lokale Steueranordnungen (13), die sich in einem vorgebbaren Umkreis der den Alarm übermittelnden Steueranordnung (13) befinden, ohne Verzögerung eine Nachricht mit dem Alarmstatus zu übermitteln.

7. Verfahren zum Bereitstellen von Umweltdaten für die Steuerung gebäudetechnischer Einrichtungen bei Gebäuden (11) an unterschiedlichen lokalen Gebäudestandorten, wobei an jedem dieser Gebäudestandorte eine Steueranordnung (13) die jeweiligen gebäudetechnischen Einrichtungen steuert, wobei mindestens ein Sensor (15) eine Umweltmessgrösse am jeweiligen Gebäudestandort erfasst, wobei lokale Umweltdaten, die auf der lokal erfassten Umweltmessgrösse basieren, an eine Datenzentrale (7) übermittelt werden, wobei die Datenzentrale (7) an mehreren Gebäudestandorten erfasste lokale Umweltdaten so in einem Datenspeicher (23) speichert, dass die Information des jeweiligen Erfassungsorts erhalten bleibt, und wobei die Datenzentrale (7) die gespeicherten Daten den lokalen Steueranordnungen (13) zur Nutzung bereitstellt, **dadurch gekennzeichnet, dass** jede der lokalen Steueranordnungen (13) unverzüglich die Übermittlung entsprechender Informationen mit einem Alarmstatus an die Datenzentrale (7) veranlasst, wenn für eine der Messgrössen entsprechende vorgegebene Bedingungen erfüllt sind.

8. Verfahren nach Anspruch 7, **dadurch gekennzeichnet, dass** die Datenzentrale (7) von den Steueranordnungen (13) empfangene Umweltdaten speichert und nach vorgegebenen Vorschriften auf den gespeicherten Umweltdaten basierende Daten an einzelne, mehrere oder alle Steuerungsanordnungen (13) übermittelt.

9. Steueranordnung (13) für ein System nach einem der Ansprüche 1 bis 6, **dadurch gekennzeichnet, dass** die Vorschriften zur Steuerung elektrotechnischer Einrichtungen dazu ausgebildet sind, diese Einrichtungen sowohl in Abhängigkeit der mindestens einen vom Sensor (15) erfassten Umweltmessgrösse als auch in Abhängigkeit von empfangenen Daten der Datenzentrale (7) zu steuern.

## Claims

1. A system for providing environmental data for controlling technical building facilities in buildings (11) at different local building locations, wherein a control arrangement (13) for controlling the respective technical building facilities is configured at each of these building locations, wherein this control arrangement (13) comprises at least one sensor (15) which is configured to detect a local measured environmental variable at the respective building location, wherein this control arrangement (13) comprises a communication device (17) which is configured to transmit local environmental data which are based on the locally detected measured environmental variable to a data centre (7) having a central communication device (21), wherein local environmental data detected by the data centre (7) at multiple building locations can be stored in a data memory (23) such that the information of the respective detection location is retained, and wherein the local environmental data and/or values of the data centre (7) calculated on the basis of these data can be used to control the technical building facilities at the different local building locations, **characterized in that** the local control arrangement (13) comprises specified conditions for the at least one measured variable, stipulating that appropriate information having an alarm status are immediately transmitted to the data centre (7).

2. The system according to Claim 1, **characterized in that** the sensor (15) is configured to detect at least one of the following measured environmental variables:
- wind speed
- wind direction
- external temperature
- precipitation in the form of rain or snow
- hail storm
- air humidity
- light intensity (brightness, twilight)
- global radiation
- sound
- air pressure
- concentration of CO2 or NOx gases
- soot particles.

3. The system according to any one of Claims 1 or 2, **characterized in that** the local control arrangement (13) comprises regulations for transmitting locally detected environmental data to the data centre (7), and a condition is predefined for at least one measured variable, stipulating that this measured variable is to be transmitted without delay to the data centre (7).

4. The system according to any one of Claims 1 to 3, **characterized in that** the local communication device (17) of each local control arrangement (13) is configured to receive environmental data from the data centre (7), which environmental data are based on environmental measured variables which have been detected by control arrangements (13) in other building locations, and local technical building facilities are controlled by the control arrangement (13) as a function of these received environmental data.

5. The system according to any one of Claims 1 to 4, **characterized in that** the data centre (7) comprises regulations for transmitting data, which are based on stored environmental data, to individual, multiple or all of the local control arrangements (13), and at least one condition is predefined in these regulations stipulating that data are to be immediately transmitted.

6. The system according to Claim 5, **characterized in that** it is provided in the regulations of the data centre (7), following the receipt of data having an alarm status from a particular local control arrangement (13), that a message having the alarm status is to be transmitted without delay to other local control arrangements (13) which are located in a predefinable vicinity of the control arrangement (13) transmitting the alarm.

7. A method for providing environmental data for controlling technical building facilities in buildings (11) at different local building locations, wherein a control arrangement (13) controls the respective technical building facilities at each of these building locations, wherein at least one sensor (15) detects a measured environmental variable at the respective building location, wherein local environmental data which are based on the locally detected measured environmental variable are transmitted to a data centre (7), wherein the data centre (7) stores local environmental data detected at multiple building locations in a data memory (23) such that the information of the respective detection location is retained, and wherein the data centre (7) provides the stored data for use to the local control arrangements (13), **characterized in that** each of the local control arrangements (13) immediately arranges for the transmission of appropriate information having an alarm status to the data centre (7), if corresponding, predefined conditions for one of the measured variables are fulfilled.

8. The method according to Claim 7, **characterized in that** the data centre (7) stores environmental data received from the control arrangements (13) and transmits data based on the stored environmental data in accordance with predefined regulations to individual, multiple or all of the control arrangements (13).

9. A control arrangement (13) for a system according to any one of Claims 1 to 6, **characterized in that** the regulations for controlling electrical facilities are configured to control these facilities both as a function of the at least one measured environmental variable detected by the sensor (15) and as a function of data received from the data centre (7).

## Revendications

1. Système pour la mise à disposition de données sur l'environnement pour la commande d'équipements techniques du bâtiment sur des bâtiments (11) à différents sites de bâtiments locaux, un agencement de commande (13) étant formé sur chacun de ces sites de bâtiments pour la commande des équipements techniques du bâtiment respectifs, cet agencement de commande (13) comprenant au moins un capteur (15), lequel est formé pour la détection d'une grandeur de mesure d'environnement locale sur le site de bâtiment respectif, cet agencement de commande (13) comprenant une installation de communication (17), laquelle est formée pour transmettre des données sur l'environnement locales, lesquelles sont basées sur la grandeur de mesure d'environnement détectée localement, à un centre de données (7) avec une installation de communication (21), des données sur l'environnement détectées localement sur plusieurs sites de bâtiment pouvant être mémorisées dans une mémoire de données (23) de telle sorte que l'information du site de détection respectif reste maintenue, et les données sur l'environnement locales et/ou des valeurs calculées au moyen de ces données du centre de données (7) pouvant être utilisées pour la commande d'équipements techniques du bâtiment sur les différents sites de bâtiment locaux, **caractérisé en ce que** le dispositif de commande (13) local comprend des conditions fixées pour l'au moins une grandeur de mesure, par lesquelles des informations correspondantes sont transmises immédiatement au centre de données (7) avec un état d'alarme.

2. Système selon la revendication 1, **caractérisé en ce que** le capteur (15) est formé pour la détection d'au moins une des grandeurs de mesure d'environnement suivantes :
- Vitesse du vent
- Direction du vent
- Température extérieure
- Précipitations sous la forme de pluie ou de neige
- Averse de grêle
- Humidité de l'air
- Éclairement (luminosité, crépuscule)
- Rayonnement global
- Son
- Pression atmosphérique
- Concentration de CO2 ou de gaz NOx
- Particules de suie.

3. Système selon l'une des revendications 1 ou 2, **caractérisé en ce que** l'agencement de commande (13) local comprend des dispositions pour la transmission de données sur l'environnement détectées localement au centre de données (7), et **en ce qu'**une condition est spécifiée pour au moins une grandeur de mesure pour laquelle cette grandeur de mesure doit être transmise au centre de données (7) sans délai.

4. Système selon l'une des revendications 1 à 3, **caractérisé en ce que** l'installation de communication (17) locale de chaque agencement de commande (13) local est formée pour recevoir du centre de données (7) des données sur l'environnement qui sont basées sur des grandeurs de mesure d'environnement, lesquelles ont été enregistrées sur d'autres sites de bâtiments, et **en ce que** la commande d'équipements techniques du bâtiment locaux est effectuée par l'agencement de commande (13) en fonction de ces données sur l'environnement reçues.

5. Système selon l'une des revendications 1 à 4, **caractérisé en ce que** le centre de données (7) comprend des dispositions pour la transmission de données qui sont basées sur les données sur l'environnement enregistrées, à des agencements de commande (13) locaux individuels, à plusieurs agencements de commande (13) locaux ou à tous les agencements de commande (13) locaux, et **en ce qu'**au moins une condition est spécifiée dans ces dispositions pour laquelle les données doivent être transmises immédiatement.

6. Système selon la revendication 5, **caractérisé en ce que** les dispositions du centre de données (7) prévoient la transmission d'un message avec l'état d'alarme sans délai après la réception de données avec un état d'alarme d'un agencement de commande (13) local déterminé à d'autres agencements de commande (13) locaux, lesquels se trouvent dans un périmètre spécifiable de l'agencement de commande (13) transmettant l'alarme.

7. Procédé pour la mise à disposition de données sur l'environnement pour la commande d'équipements techniques du bâtiment sur des bâtiments (11) à différents sites de bâtiments locaux, un agencement de commande (13) commandant les équipements techniques du bâtiment respectifs sur chacun de ces sites de bâtiments, au moins un capteur (15) détectant une grandeur de mesure d'environnement sur le site de bâtiment respectif, des données sur l'environnement locales, qui sont basées sur la grandeur de mesure d'environnement détectée localement, étant transmises à un centre de données (7), le centre de données (7) enregistrant des données sur l'environnement locales détectées sur plusieurs sites de bâtiments dans une mémoire de données (23) de telle sorte que l'information de l'emplacement de détection respectif reste maintenu, et le centre de données (7) mettant à disposition des agencements de commande (13) locaux les données enregistrées pour utilisation, **caractérisé en ce que** chacun des agencements de commande (13) locaux ordonnent la transmission au centre de données (7) d'informations correspondantes avec un état d'alarme lorsque des conditions spécifiées correspondantes sont remplies pour une des valeurs de mesure.

8. Procédé selon la revendication 7, **caractérisé en ce que** le centre de données (7) enregistre des données sur l'environnement reçues par les agencements de commande (13) et transmet des données basées sur les données sur l'environnement enregistrées à des agencements de commande (13) individuels, à plusieurs agencements de commande (13) ou à tous les agencements de commande (13).

9. Agencement de commande (13) pour un système selon l'une des revendications 1 à 6, **caractérisé en ce que** les dispositions pour la commande d'équipements électrotechniques sont formées pour commander ces équipements aussi bien en fonction d'au moins une grandeur de mesure d'environnement enregistrée par le capteur (15), qu'en fonction de données reçues du centre de données (7).
